# EUROPEAN PATENT SPECIFICATION

(11) **EP 1 060 218 B1**
(45) Date of publication and mention of the grant of the patent: **18.12.2002**
(21) Application number: 99906269.8
(22) Date of filing: 23.02.1999
(51) Int. Cl.: C09C 1/02, C09C 1/36, C09C 1/42, C09C 3/06, C09C 3/08, B09B 5/00, C02F 11/06

(54) **METHOD FOR IMPROVING THE STABILITY OF A SLURRY**
VERFAHREN ZUR VERBESSERUNG DER STABILITÄT EINER SUSPENSION
PROCEDE POUR AMELIORER LA STABILITE D'UNE SUSPENSION EPAISSE

(30) Priority: 24.02.1998 FI 980417; 17.12.1998 FI 982735
(43) Date of publication of application: 20.12.2000
(73) Proprietor: KEMIRA CHEMICALS OY, 00101 Helsinki (FI)
(72) Inventor: HUKKANEN, Pentti, FIN-90620 Oulu (FI); LEHTINEN, Kari, FIN-02400 Kirkkonummi (FI)
(74) Representative: Svensson, Johan Henrik
(86) International application number: FI9900140
(87) International publication number: WO99043756

(56) References cited:
- EP-A2- 0 439 374
- WO-A1-97/44398
- WO-A1-98/01621
- DE-A1- 2 206 775
- WPI/DERWENT'S ABSTRACT, No. 89-322077, week 8944; & SU 1451031 A (GIPRONINEMETALLORUD) 15 January 1989.

## Description

The invention relates to a method for improving the storability of a slurry. In particular the method relates to pigment slurries which are used in the coating of paper.

By a slurry is meant here any suspensions made up of water and a finely-divided solid material, typically having a solids content above 10-20 %. Such slurries include pigment slurries used in the paper industry, pastes and putties used in the building industry, and sludges formed in the treatment of waste waters. In the paper industry, pigment slurries are used in the manufacture of coated papers. A pigment slurry contains gypsum, kaolin, talc, calcium carbonate, titanium dioxide, and other such finely-divided inorganic materials. Often these slurries also contain organic chemicals used for improving the properties of the slurry.

Especially in the handling of pigment slurries there is the problem of spoiling of the slurry, which is due to microbial growth forming in the slurry. A white pigment slurry spoiled by microbial growth becomes dark in color, it acquires an unpleasant odor, and its rheological properties change, in which case it cannot be used in papermaking. Attempts have been made to solve this problem by adding to the pigment slurry a substance which destroys microbes, i.e. a biocide. Biocides are in general divided into two categories: oxidative and non-oxidative biocides. Biocides destroy microorganisms by destroying the cell wall, the cell cytoplasm frame or the structural parts of the cell. In this manner they inhibit the growth of microorganisms in the environment of use. The biocides commonly used are toxic substances which may cause allergic symptoms to employees in spite of the amounts used being small. In addition, the efficacy of present-day biocides is not always sufficient, and therefore their doses have to be increased.

One problem in the paper industry is the rapid spoiling of waste paste. By waste paste is meant the pigment paste which is left over from the coating of paper and which is apt to spoil, since the temperature is favorable for the proliferation of microbes and since the waste paste contains sufficient nutrition for bacteria. Furthermore, the waste paste is apt to spoil since it comes into contact with process surfaces which are inevitably contaminated (waste canals, collection containers, pipes and other surfaces which are not usually treated with biocides). For this reason, the waste paste has a vigorous and diverse microbial population on which the effect of conventional commercial biocides is poor and their dosage requirement is high. In general, waste paste is disposed of by removing excess water from it by filtration, whereafter the paste is transported to a dump. Even at a dump the waste paste is a problem because of the biocides, optical brighteners and other chemicals present in it.

It is a known method to use peracetic acid as a biocide in the circulating waters of the paper industry. In this application the objective is to keep the water lines clean and to prevent microbiological spoiling of the fiber material and water. The biocide amounts used in the circulating waters are very small, usually only a few grams per one metric ton of circulating water.

On the basis of US patent publication 5,658,467 it is known to use peracetic acid together with a non-oxidative biocide to inhibit the growth of microorganisms in industrial process waters, in particular the circulating waters of the paper industry. It is stated that a synergistic effect is achieved through this use. In addition, Example 19 of this patent publication describes a test in which a kaolin slurry is treated with the said combination of peracetic acid and a non-oxidative biocide, whereby inhibition of bacterial growth is achieved. In contrast, in a reference test, in which there was used 2000 ppm of a peracetic acid having a 5 per cent activity, corresponding to approx. 100 ppm of peracetic acid indicated as a 100 per cent peracetic acid, an inhibiting effect on bacterial growth was not achieved.

Document WPI Derwent's Abstract, No. 89-322077, week 8944; & SU 1451031, relates to mica processing wherein finely split mica particles are treated with peroxysulphuric acid in an amount of 10-50 % per weight of mica. The treatment improves the lustre (reflection properties) of mica. The treated product can be used i.a. as pigments in pearly dyes or in fillers for resins, plastics and varnishes.

DE-A1-2206775 discloses a process for coating a TiO₂ pigment with an aluminium oxide hydrate layer in which process an aqueous suspension of a TiO₂ pigment is treated with a solution of an alkaline aluminium chloride in the presence of an oxidizing salt such as a peroxydisulphate salt. The purpose of the coating is to reduce the photo activity of titania, in other words to improve the UV light stability of a resin composition containing said titania pigment.

WO-A1-9744398 discloses improving the stability of particular white pigments against solar UV radiation by coating the pigment particles with an oxidizing agent. The oxidizing agent is typically a perborate, metaborate, tetraborate, chlorate, perchlorate, peroxydisulphate or peroxide. The pigments to be coated comprise TiO₂, ZnO, SnO₂, Zn₂TiO₄, Zn₂SnO₄ or SnTiO₄, and the pigments contain 1-10 % by weight of the oxidizing agent.

Thus, in industry there is a need for a biocide which would be sufficiently effective and which would not have the above-mentioned problems relating to occupational hygiene and the environment. In addition, it should also be possible, through the use of a biocide, to inhibit bacterial growth also in waste paste, whereupon the waste paste could be recycled, a factor which would substantially reduce the amounts of pigment and chemicals going to waste.

The above-mentioned objectives are achieved by the method according to the invention, the characteristics of which are given in the accompanying claims.

Thus the invention relates to a method for improving the storability of an aqueous slurry which contains inorganic solids against microbial growth, the method being characterized in that a peracid, or a salt thereof, is added to the slurry in an amount of 200 - 5000 g/ metric ton of dry solids, calculated as a 100 per cent peracid.

In the tests carried out there was observed, surprisingly, that peracids are capable not only of destroying a microbial growth in a slurry but also of inhibiting the proliferation of microbes in the long term. Peracids are strong oxidants which, when hydrolyzing, break down and release active oxygen. It is evident that, when the peracid reacts, there are formed as intermediate products more stable calcium, potassium, sodium, ammonium and other persalts, from which active oxygen is released more slowly. For example, calcium persulfate is probably formed in a gypsum slurry.

According to the invention, the peracid, or salt thereof, used is preferably peracetic acid, persulfuric acid (peroxysulfuric acid), i.e. Caro's acid, perdisulfuric acid (peroxydisulfuric acid), i.e. Marshall's acid, performic acid or perpropionic acid, or an alkali or alkaline-earth metal salt thereof. The alkali and alkaline-earth metal salts which can be used include in particular sodium, potassium, magnesium and calcium salts.

Peracetic acid is a chemical which is formed when acetic acid and hydrogen peroxide react in the presence of a catalyst. There are commercially available various products, for example a 38 per cent distilled peracetic acid (dPAA) and an equilibrium mixture of peracetic acid (ePAA). The compositions of these solutions are typically as follows: dPAA contains peracetic acid 38 %, acetic acid 3 %, hydrogen peroxide 1 %, and water approx. 58 %; ePAA contains peracetic acid 20 %, acetic acid 25 %, hydrogen peroxide 15 %, and water approx. 40 % (in per cent by weight).

Peracetic acid has properties which render it usable in pigment slurries as compared with conventional biocides. Peracetic loads the environment only slightly, since it is less toxic than conventional non-oxidative biocides. Furthermore, it is biodegradable. Peracetic acid breaks down to hydrogen peroxide and acetic acid when it reacts with an organic substance.

Caro's acid, i.e. peroxysulfuric acid (H₂SO₅) and Marshall's acid, i.e. peroxydisulfuric acid (H₂S₂O₈) are strong oxidants. They become hydrolyzed in water to hydrogen peroxide and sulfuric acid. Performic acid, i.e. peroxoformic acid (HCOOOH) breaks down to formic acid and oxygen.

The aqueous slurry containing inorganic solids, to be treated according to the invention, is preferably a pigment slurry. This pigment slurry may be a waste pigment slurry, for example waste paste, by which is meant the pigment paste left over from the coating of paper.

The said pigment is preferably gypsum, kaolin, talc, calcium carbonate or titanium dioxide.

The solids content in the aqueous slurry to be treated according to the invention is preferably at minimum 10 % by weight, highly preferably 30-80 % by weight.

The amount of peracid or salt thereof to be added to the aqueous slurry is preferably approx. 200-5000 g/t of dry solids, calculated as a 100 per cent peracid. The said amount is highly preferably approx. 500-2000 g/t of dry solids, calculated as a 100 per cent peracid.

According to one preferred embodiment, peracetic acid is added to the pigment slurry in an amount of 500-2000 g/t of pigment, calculated as a 100 per cent peracetic acid per dry matter of pigment.

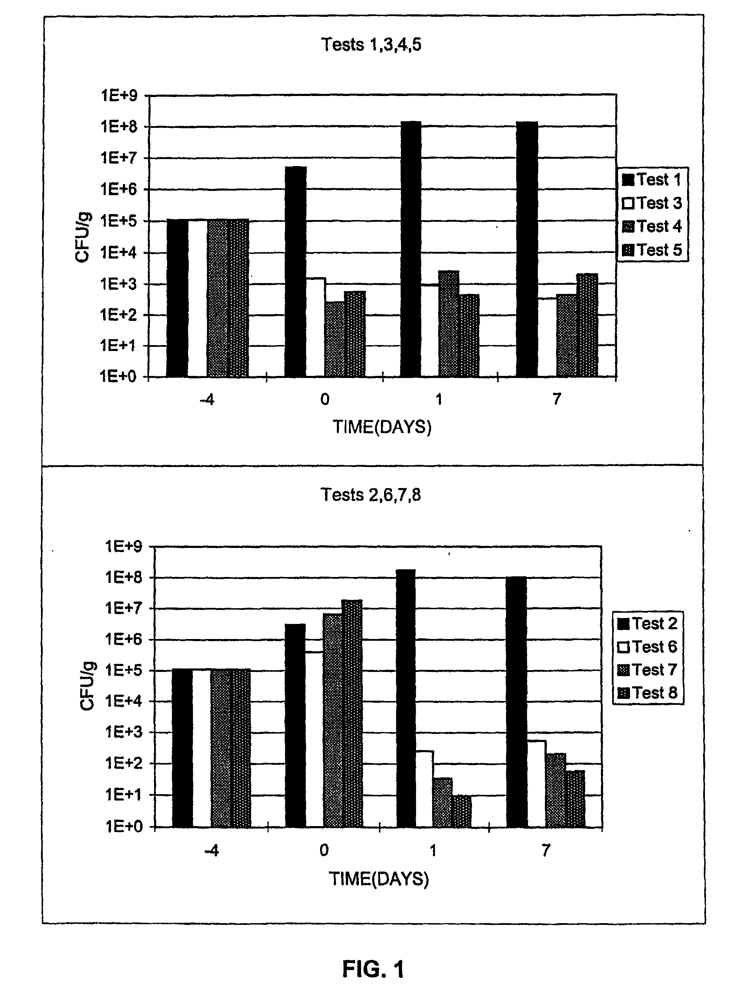

The invention is described below in greater detail with the help of examples and a figure, in which
Figure 1 depicts results of tests in which the treatment according to the invention was compared with an untreated pigment slurry and with a pigment slurry treated with a commercial product.

### Example 1

A test was arranged the purpose of which was to investigate the storability of a gypsum pigment slurry after a treatment according to the invention and after a conventional treatment.

### Treatment

Samples of 2 kg were taken from an untreated gypsum slurry into eight plastic vessels equipped with covers. Test 1 comprised an untreated reference sample. Test 2 was an untreated reference sample which was contaminated artificially. In Tests 3-5 there was first carried out a treatment with a biocide (a commercial biocide 400 g/t, PAA 2000 g/t and PAA 4000 g/t), whereafter artificial contamination was carried out after 4 days. In Tests 6-8 there was first carried out an artificial contamination and thereafter a treatment with a biocide as above. The artificial contamination was carried out by adding 20 g (1 %) of a naturally spoiled gypsum pigment into the test vessels.

### Sample taking and culture

The microbiology of gypsum pigment was studied by taking samples from the test vessels before the beginning of the tests (-4 d), after the biocide treatment/contamination (0 d) and after the contamination/biocide treatment (1 d and 7 d). Two parallel 1 g samples were taken from a well stirred gypsum sample, and they were diluted in a sterile salt solution as a 10-fold series. Thereafter the dilution series were filtered on 0.45 µm pore size cellulose nitrate filter membranes, which were placed on PCA plates. The plates were incubated upside down at 37 °C for 48 h.

Before the stirring and sample taking, the redox potential was measured from each vessel. Redox potential depicts the quantity of anaerobic bacteria. A vigorous growth of the bacterial population is seen as a low value of the redox potential. When the value of the redox potential is high, the oxygen situation in the pigment slurry is good and no growth of anaerobic bacteria has occurred. Respectively, lower redox potential values indicate that spoiling caused by bacteria has occurred. A negative redox potential usually means that the slurry is completely spoiled, and in such a case the slurry has a strong spoiled odor.

### Results

The level of aerobic bacteria was estimated by counting the colonies formed on the PCA plates. The results are indicated in CFU (Colony Forming Unit)/g of gypsum. The results of the tests are shown in Tables 1 and 2 and in Figure 1.

It can be seen from Tests 4 and 5 in Table 1 that PAA had a clear long-term effect. Four days after the PAA treatment, the PAA had retained its activity and was capable of inhibiting bacterial growth. It can be noted from the results that the best results were obtained with the largest PAA dose (Test 8), i.e. bacteria in the contaminated pigment were destroyed. Also with the lower PAA dose a better result was obtained than with the commercial biocide.

The results in Table 2 show that the biocide treatment clearly slowed down the proliferation of bacteria. The gypsum pigment treated with the commercial biocide had been preserved, but its redox potential was low. In the PAA-treated slurries the redox potentials were clearly higher. Furthermore, PAA had a clear long-term effect, and contamination carried out after 4 days was not capable of causing spoiling of the pigment. The redox potentials show that the pigment slurries treated with PAA had been preserved considerably better than the pigment slurry treated with the commercial biocide.

**Table 1**

| Bacterial counts in the tests of Example 1 | | | | | | |
|---|---|---|---|---|---|---|
| Test | Treatment | Dose g/t | Bacterial count CFU/g | | | |
| | | | -4 d | 0 d | 1 d | 7 d |
| 1 | Reference | - | 100000 | 5000000 | 130000000 | 100000000 |
| 2 | Reference + contamination | - | 100000 | 3000000 | 130000000 | 100000000 |
| 3 | Commercial + contamination | 400 | 100000 | 2000 | < 1000 | < 1000 |
| 4 | PAA + contamination | 2000 | 100000 | < 1000 | 3000 | < 1000 |
| 5 | PAA + contamination | 4000 | 100000 | < 1000 | < 1000 | 2000 |
| 6 | Contamination + commercial | 400 | 100000 | 400000 | < 1000 | < 1000 |
| 7 | Contamination + PAA | 2000 | 100000 | 6000000 | < 100 | < 1000 |
| 8 | Contamination + PAA | 4000 | 100000 | 18000000 | < 100 | < 100 |

**Table 2**

| Redox potentials in the tests of Example 1 | | | | | |
|---|---|---|---|---|---|
| Test | Treatment | Dose g/t | Redox potential mV | | |
| | | | 0 d | 1 d | 7 d |
| 1 | Reference | - | 0 | -50 | -250 |
| 2 | Reference + contamination | - | 0 | -320 | -300 |
| 3 | Commercial + contamination | 400 | 100 | 100 | 70 |
| 4 | PAA + contamination | 2000 | 220 | 180 | 170 |
| 5 | PAA + contamination | 4000 | 250 | 220 | 200 |
| 6 | Contamination + commercial | 400 | 60 | 60 | 100 |
| 7 | Contamination + PAA | 2000 | 30 | 320 | 220 |
| 8 | Contamination + PAA | 4000 | 50 | 350 | 220 |

### Example 2

A test was arranged the purpose of which was to investigate the storability of a waste paste treated according to the invention as compared with the storability of a corresponding untreated waste paste. The waste paste used in the tests was a waste coating paste in which the pigment was a mixture of gypsum and kaolin at a dry matter weight ratio of 60/40. The waste paste was filtered, whereupon its solids content was approx. 30 %. Samples of PAA-treated waste paste were taken from two different treatment batches (Tests 10 and 11). In the PAA treatment (10 and 11) there was used a dose of 2 kg/t, indicated as a 100 per cent acid per dry matter.

The assay of aerobic bacteria was carried out using PCA plates and a 2 d incubation at 37 °C. For the assay of anaerobic bacteria, Brewer's agar and a 2 d incubation in anaerobic vessels at 37 °C were used. For the assay of slime-forming bacteria, PCA-agar + saccharose 50 g/l and a 2 d incubation at 37 °C were used. The slimy colonies were counted. Yeasts and molds were assayed by using Saboraud maltose agar plates and a 3-4 day incubation at 30 °C.

The results are shown in accompanying Table 3.

**Table 3**

| Results of the tests of Example 2 | | | | | | |
|---|---|---|---|---|---|---|
| Test | Treatment | Bacteria count/ml | | | Fungi count/ml | |
| | | Aerobes | Anaerobes | Slime-forming | Yeasts | Molds |
| 9 | Reference | 14000000 | 4000000 | 20000 | 200 | < 100 |
| 10 | PAA-treated | 2000 | < 100 | < 1000 | < 100 | < 100 |
| 11 | PAA-treated | < 1000 | < 100 | < 1000 | < 100 | < 100 |

Judging from the results, a treatment with PAA inhibited the growth of bacteria and fungi in the waste paste.

### Example 3

A test was arranged in which various peracids were used and the slurry was a slurry prepared from a commercial kaolin. Peracetic acid (dPAA), performic acid (PFA) and Caro's acid were used in the test so that the dose of each was the same, 2 kg/t, indicated as a 100 per cent acid per one metric ton of dry kaolin. In the reference test, the same kaolin slurry was used but without any treatment. The results of the tests are shown in accompanying Table 4.

**Table 4**

| Assays of the tests of Example 3, 5 days after the treatment | | | | | | |
|---|---|---|---|---|---|---|
| Test | Treatment | Bacteria count/ml | | | Fungi | count/ml |
| | | Aerobes | Anaerobes | Slime-forming | Yeasts | Molds |
| 12 | Reference | 1900000 | < 100 | < 1000 | 400 | 1600 |
| 13 | dPAA | < 1000 | < 100 | < 1000 | < 100 | 800 |
| 14 | PFA | 1000 | < 100 | < 1000 | < 100 | < 100 |
| 15 | Caro | < 1000 | 300 | < 1000 | < 100 | < 100 |

The results of the tests show that all of the peracids inhibit the growth of aerobic bacteria. On the basis of the tests, the efficacy of Caro's acid on anaerobic bacteria is not very good and, furthermore, the efficacy of peracetic acid against molds is also not very good. The last-mentioned result is in disagreement with the result obtained using gypsum (Test 10).

### Example 4

A test was arranged using peracids and slurries prepared from commercial products and having solids contents ranging from 60 to 70 %. The first two slurries were clearly spoiled already at the outset of the test, and their redox potentials were negative. Peracetic acid (dPAA), performic acid (PFA) and Caro's acid were used in the tests so that the dose of each was the same, 2 kg/t, indicated as a 100 per cent acid per one metric ton of dry matter of the pigment. The results of the tests are shown in accompanying Table 5.

**Table 5**

| Redox potentials in the tests of Example 4 | | | | | |
|---|---|---|---|---|---|
| Test | Slurry | Redox potential mV | | | |
| | | Time d | dPAA | Caro | PFA |
| 16 | Talc | 107 | 117 | 118 | 87 |
| 17 | Gypsum | 118 | 194 | 237 | 234 |
| 18 | TiO₂ | 16 | 249 | 375 | 77 |
| 19 | Raw kaolin | 107 | 227 | 305 | 250 |
| 20 | Kaolin 1 | 104 | 247 | 304 | 221 |
| 21 | Kaolin 2 | 116 | 271 | 266 | 274 |
| 22 | Chalk | 103 | 212 | 290 | 213 |

## Claims

1. A method for improving the storability of an aqueous slurry which contains inorganic solids against microbial growth, **characterized in that** there is added to the slurry a peracid, or a salt thereof, in an amount of 200-5000 g/metric ton of dry solids, calculated as a 100 per cent peracid.

2. A method according to Claim 1, **characterized in that** the peracid, or salt thereof, used is peracetic acid, persulfuric acid, perdisulfuric acid or performic acid, or an alkali or alkaline-earth metal salt thereof.

3. A method according to Claim 1 or 2, **characterized in that** the aqueous slurry which contains inorganic solids is a pigment slurry.

4. A method according to Claim 3, **characterized in that** the pigment is a waste pigment.

5. A method according to Claim 3 or 4, **characterized in that** the pigment is gypsum, kaolin, talc, calcium carbonate or titanium dioxide.

6. A method according to any of the above claims, **characterized in that** the solids content in the aqueous slurry is at minimum 10 % by weight, preferably 30-80 % by weight.

7. A method according to Claim 1, **characterized in that** the amount of the peracid, or salt thereof, is 500-2000 g/metric ton of dry solids, calculated as a 100 per cent peracid.

## Patentansprüche

1. Verfahren zur Verbesserung der Lagerstabilität einer wässrigen Aufschlämmung, die anorganische Feststoffe enthält, gegen mikrobielles Wachstum, **dadurch gekennzeichnet, dass** zu der Aufschlämmung eine Persäure oder ein Salz einer Persäure in einer Menge von 200 bis 5.000 g/t trockener Feststoffe gegeben wird, berechnet als 100 % Persäure.

2. Verfahren nach Anspruch 1, **dadurch gekennzeichnet, dass** die eingesetzte Persäure oder das Salz davon Peressigsäure, Perschwefelsäure, Peroxydischwefelsäure oder Perameisensäure, oder ein Alkali- oder Erdalkalimetallsalz davon ist.

3. Verfahren nach Anspruch 1 oder 2, **dadurch gekennzeichnet, dass** die wässrige Aufschlämmung, die anorganische Feststoffe enthält, eine Pigmentaufschlämmung ist.

4. Verfahren nach Anspruch 3, **dadurch gekennzeichnet, dass** das Pigment ein Abfallpigment ist.

5. Verfahren nach Anspruch 3 oder 4, **dadurch gekennzeichnet, dass** das Pigment Gips, Kaolin, Talk, Calciumcarbonat oder Titandioxyd ist.

6. Verfahren nach einem der vorangehenden Ansprüche, **dadurch gekennzeichnet, dass** der Gehalt an Feststoffen in der wässrigen Aufschlämmung mindestens 10 Gew.%, vorzugsweise 30 - 80 Gew.%, beträgt.

7. Verfahren nach Anspruch 1, **dadurch gekennzeichnet, dass** die Menge der Persäure, oder eines Salzes davon, 500 - 2.000 g/t trockener Feststoffe beträgt, berechnet als 100 % Persäure.

## Revendications

1. Procédé pour améliorer l'aptitude au stockage d'une suspension épaisse aqueuse qui contient des solides inorganiques contre la croissance microbienne, **caractérisé en ce qu'**est ajouté à la suspension épaisse un peracide, ou un de ses sels, dans une quantité de 200 à 5 000 g par tonne métrique du solide sec, calculé comme un peracide à 100 pour cent.

2. Procédé selon la Revendication 1, **caractérisé en ce que** le peracide, ou son sel, utilisé est l'acide peracétique, l'acide persulfurique, l'acide perdisulfurique ou l'acide performique, ou un de leurs alcalin ou sels métalliques alcalino-terreux.

3. Procédé selon la Revendication 1 ou 2, **caractérisé en ce que** la suspension aqueuse épaisse qui contient les solides inorganiques est une suspension épaisse de pigments.

4. Procédé selon la Revendication 3, **caractérisé en ce que** le pigment est un pigment de rebut.

5. Procédé selon la Revendication 3 ou 4, **caractérisé en ce que** le pigment est du gypse, du kaolin, du talc, du carbonate de calcium ou du dioxyde de titane.

6. Procédé selon une quelconque des Revendications ci-dessus, **caractérisé en ce que** la teneur en solide de la suspension aqueuse épaisse est au minimum de 10% en masse, de préférence de 30 à 80% en masse.

7. Procédé selon la Revendication 1, **caractérisé en ce que** la quantité de peracide, ou de son sel, est de 500 à 2 000 g par tonne métrique de solide sec, calculé comme un peracide à 100 pour cent.
